# EUROPEAN PATENT SPECIFICATION

(11) **EP 0 744 208 B1**
(45) Date of publication and mention of the grant of the patent: **25.09.2002**
(21) Application number: 96108106.4
(22) Date of filing: 21.05.1996
(51) Int. Cl.: B01D 53/40, B01D 53/48, B01D 53/68

(54) **Method for neutralizing acid substances present in gases of industrial origin**
Verfahren zur Neutralisierung von Säuren in industriellen Gasen
Procédé pour la neutralisation de substances acides dans des gaz d'origine industrielle

(30) Priority: 25.05.1995 IT MI951070
(43) Date of publication of application: 27.11.1996
(73) Proprietor: ECODECO S.p.A., I-27010 Giussago (Pavia) (IT)
(72) Inventor: Natta, Giuseppe, 27010 Giussago (Pavia) (IT); Donati, Cristina, 20017 Rho (Milano) (IT)
(74) Representative: Forattini, Amelia

(56) References cited:
- US-A- 4 201 753
- US-A- 4 547 351

## Description

The present invention relates to a method for neutralizing acid substances present in gases of industrial origin.

More particularly, the present invention relates to a method for neutralizing acid industrial gases having low concentrations of inorganic acids.

The term "industrial gases" as used in the present description and in the claims essentially refers to flue gases produced by industrial chemical processes and more particularly to the gases generated by the burning of conventional fossil and hydrocarbon-derived fuels and from the burning of unconventional fuels, such as the residues of industrial treatments or municipal solid waste. These gases may contain, in low concentrations, for example lower than 10,000 ppm, acid substances that are essentially based on chlorine.

The problem of eliminating the residual acid compounds that are present in industrial gases and the technologies provided to perform it have been dealt with extensively in scientific literature and in industrial practice due to the considerable implications in terms of environmental impact. This problem will become more important due to the numerical growth of incinerators for industrial waste and most of all for municipal solid waste, which currently constitute the only reliable and low-cost technology for their elimination and reduction.

The problem of the presence of acid substances in industrial gases, and particularly in combustion gases, is dealt with by using the following technologies:
-- addition of neutralizing substances to the combustible materials;
-- use of special combustion systems that are capable of fixing the acid substances;
-- elimination of the acid substances.

German patent application published as no. 2,721,878, for example, discloses a method for eliminating SO₂ from combustion gases by using basic substances such as sodium hydroxide, sodium carbonate, or lime, fed directly into the combustion chamber in a finely divided form. A drawback of this method is that it requires, for the neutralization reaction, a more than stoichiometric amount of basic substances, with the risk of damaging the structures and materials of the furnace, at the high temperatures that occur during operation, and of causing the forming of glassy residues that could reduce the efficiency of the furnace.

A second method for eliminating the acid substances in industrial gases is described, for example in "Perry's Chemical Engineering Handbook" (Sixth Edition), 20, page 72. According to this method, the acid residues that are present in the combustion gases can be eliminated by combustion systems that are constituted by fluid beds with basic materials, such as dolomite or other carbonate rocks. These systems are expensive and complicated in operation, due to the need to continuously discharge and replenish the solid that becomes depleted.

Another method for eliminating the acid components in combustion gases is described in the above mentioned German patent application and entails the spray injection, in the hot gases, of aqueous solutions that contain sodium hydroxide or sodium carbonate.

However, there are drawbacks also in this method. Although the solid is in a finely divided phase, as a result of the evaporation of the water, the neutralization reaction may not be complete, because the speed of the stream of spent gases may be higher than the reaction kinetics. This fact causes an accumulation of still-active neutralizing agent on the filters and the discharge into the environment of a combustion gas that still entrains significant amounts of acid substances. Furthermore, since this is a heterophasic reaction, the problems linked to an intrinsic inefficiency of the process, caused by inter- and intra-phase transport phenomena that cannot be obviated even by using fine particle sizes, remain unsolved.

Finally, these drawbacks combine with the constraints of having to use hot gases, such as those that originate from combustion, and of therefore excluding industrial gases of a different kind that are available at lower temperatures.

US-4547351 discloses a process for neutralizing sulfur compounds in flue gases from the combustion of fossil fuels. The process operates at a high temperature.

The Applicant has now discovered a method for neutralizing acid substances contained in industrial gases which, by operating in the vapor phase, does not have the drawbacks of the prior art and allows to fully eliminate acid substances by using substantially stoichiometric amounts of neutralizing agent.

Therefore, the present invention relates to a method for neutralizing chlorine acid present in gases of industrial origin, which essentially consists in placing the industrial gas in contact with vapors of at least one neutralizing agent, chosen among alkaline metals, their oxides and/or hydroxides, that originate from the corresponding boiling liquid phase.

According to the method of the present invention, the term "industrial gases" preferably refers to the gases that originate from the combustion of combustion of industrial residues or of municipal solid waste. These gases, after transferring their sensible heat in the boiler, have a temperature of approximately 150-200°C. However, the definition of industrial gases also includes gases of different origin, such as for example the spent gases of processes for the production of sulfuric acid or of processes for synthesizing vinyl chloride, which can be treated with the method according to the present invention even if they are available at lower temperatures.

The preferred alkaline metals, according to the present invention, are sodium and potassium, used alone or mixed together, and are present as metals as such or as oxides and/or hydroxides. These alkaline metals and/or oxides and/or hydroxides are vaporized from the corresponding Liquid phases, which are kept boiling in adapted crucibles that are arranged so that they are struck by the acid gases to be neutralized and are heated with conventional methods, described hereinafter.

The preferred neutralizing agent is sodium hydroxide, due to its easy availability and low cost and because it has been observed that it has interesting characteristics for its high fluidity in the molten state, low electrical conductivity, and very high electromagnetic energy absorption. These characteristics allow to provide high-value heat exchanges and high evaporation rates.

Sodium hydroxide, or caustic soda, is available in the solid state as pearls or flakes and can be melted and brought to a boil at the temperature of approximately 1300-1400°C with known methods, for example by collecting the caustic soda in crucibles heated by a flame, with an electric resistor, by electrical induction, with microwaves, et cetera.

Any material capable of withstanding the corrosive action of the molten and boiling neutralizing agent can be used as raw material for the melting crucible. However, compact graphite is preferred, since it has proved itself particularly inert in these operating conditions.

According to an alternative of the present method, the neutralizing agent in the vapor phase can be obtained by direct combustion, in the industrial gas, of concentrated aqueous solutions and by using flames at a high temperature, for example between 1500 and 2000°C.

The method for neutralizing acid substances present in gases of industrial origin according to the present invention will become apparent by reference to the accompanying figures, which illustrate exemplifying but non-limitative embodiments thereof. More particularly:
-- Figure 1 is a general diagram of the present method, related to the treatment of a combustion gas;
-- Figure 2 shows a detail of the diagram of Fig. 1 according to a first aspect of the invention;
-- Figure 3 shows a detail of the diagram of Fig. 1, according to a further aspect of the invention.

With reference to the figures, fumes 1 containing acid substances that leave a boiler C mix with vapors 3 of the neutralizing agent in a mixing section V that is located at a crucible G. The crucible is fed continuously with a solid neutralizing agent 2 by means of a screw feeder D.

The neutralizing agent vapors react with the acid substances contained in the fumes and the resulting stream 4 is fed to a filter S. Fumes 6, practically free from acid substances, and the products 5 of the neutralization reaction, possibly together with the particulate entrained by the fumes, are discharged from the filter.

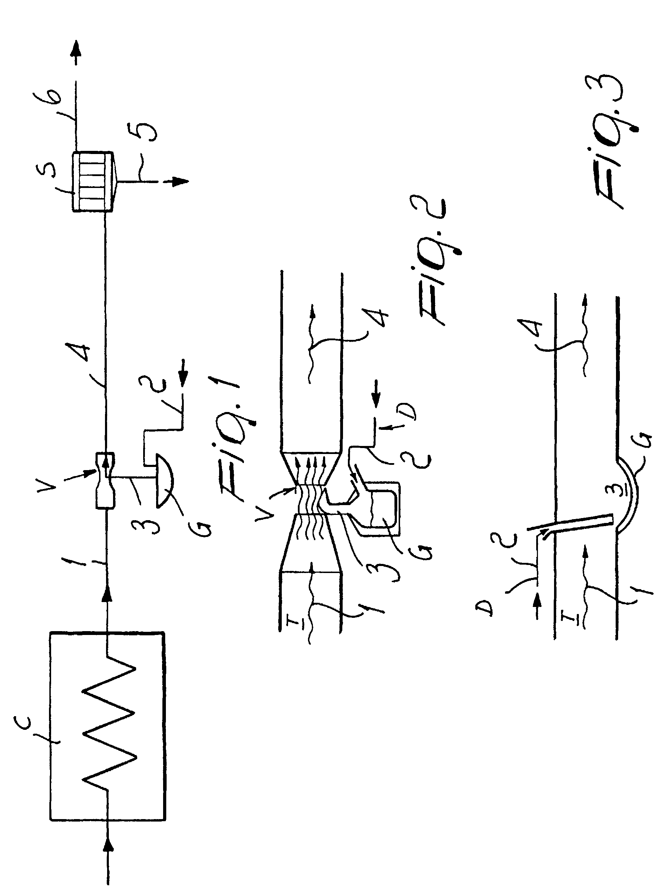

Mixing section V, as shown in Figure 2, can be constituted by a narrower portion of a fume conveyance tube T, which is capable of providing a Venturi effect. The neutralizing agent vapors are drawn by the fumes, mix with them, and react almost instantaneously with the acid substances that are present in the fumes. In this arrangement, crucible D is located outside the tube.

Fig. 3 shows a second embodiment of the invention wherein the crucible is an integral part of the fume conveyance tube and it is obtained by modifying the bottom of the tube. In this arrangement, contact between the acid fumes and the vapors occurs spontaneously, without requiring entrainments by Venturi effect.

The method for neutralizing acid substances present in gases of industrial origin according to the present invention can be performed continuously, because the crucible can be fed in such a way as to keep a constant level of liquid inside it.

The present invention is now described with reference to some non-limitative examples.

### EXAMPLE 1

By analogy with the drawings of the accompanying figures 1 and 2, a tube of Pyrex glass T with a diameter of 30 mm, is provided with a narrower portion, V measuring 15 mm, and with a ceramic porous wall S downstream of the narrower portion.

Narrower portion V is connected to a crucible G made of compact graphite, which is heated by a methane-fired bellows.

The tube is fed with approximately 20 N cu m/h of air that contains approximately 2000 ppm of hydrochloric acid. The crucible is filled with 40 g of anhydrous NaOH in pearls, brought to a boil.

An opalescent powder forms inside narrower portion V. This power collects on the filter S, and upon analysis is found to be essentially constituted by NaCl. Analysis by gas chromatography of the air that leaves the filter shows an HCl concentration of less than 10 ppm.

### EXAMPLE 2

A device similar to the one of the above example 1 is substantially used, replacing the crucible with a laboratory burner inserted in the glass tube.

The tube is fed with 1 N cu m/h of hydrogen, 0.5 N cu m/h of primary oxygen, and 0.2 N cu m/h of secondary oxygen, so as to generate a flame approximately 16 cm long at a temperature of 1700°C.

The burner is also fed with a 50% aqueous solution of soda at a flow-rate of approximately 340 cu cm/h.

40 N cu m/h of air, containing 110 g of HCl and 1600 g of CO₂, are made to flow in the glass tube. One hour later, 350 g of powder were collected on the filter and were found, upon analysis, to be constituted by NaCl and Na₂CO₃. At the output of the filter, the air, bubbled through water, showed no residual acidity.

It has thus been demonstrated that the present method is capable of neutralizing acids even in the presence of large amounts of CO₂.

### EXAMPLE 3

An industrial incineration furnace located in Filago (Bergamo, Italy), suitable to process liquid effluents of the aqueous and/or organic type, produces approximately 40,000 N cu m/h of acid fumes 1; after losing their sensible heat in a boiler, the fumes have the composition listed in the table, and in particular they have a content of approximately 3000 ppm of HCl, 2000 ppm of H₂SO₄, and 1000 ppm of H₃PO₄ and a temperature of 200°C.

An induction furnace, with a graphite crucible having a volume of 200 liters, was installed directly after the boiler; approximately 330 kg/h of soda in pearls 2 were fed into the crucible. One proceeds substantially according to the diagram of Figure 1.

Measurements and balances show that all the fed soda evaporated, in the steady state, with 150 kg of crucible filling and with a power consumption of approximately 500 kW.

Approximately 520 kg/h of powder 5 containing sodium chloride, sulphate, phosphate, and carbonate were collected in a bag filter; the carbonate was collected due to the slight excess of evaporated soda.

The fumes that left the filter were found to be substantially free of detectable acid substances.

**TABLE**

| streams | 1 | 2 | 3 | 4 | 5 | 6 |
|---|---|---|---|---|---|---|
| species | ACID FUMES | SODA | SODA vapor | Neutr. GASES | solids | GASES |
| state | gas | solid | gas | gas/solid | solid | gas |
| N2 | 39942 | | | 39442 | | 39942 |
| 02 | 2739 | | | 2739 | | 2739 |
| CO2 | 5858 | | | 5841 | | 5841 |
| H20 | 2397 | | | 2545 | | 2545 |
| HCL | 154 | | | | | |
| H2SO4 | 102 | | | | | |
| H3P04 | 51 | | | | | |
| NaOH | | 331 | 331 | | | |
| Na2C03 | | | | 42 | 42 | |
| NaCl | | | | 246 | 246 | |
| Na2SO4 | | | | 148 | 148 | |
| Na3PO4 | | | | 86 | 86 | |
| TOTAL kg/h | 51243 | 331 | 331 | 51589 | 522 | 51067 |
| P ATM | 1.00 | 1.00 | 0.90 | 1.00 | 1.00 | 1.00 |

## Claims

1. A method of neutralizing chlorine acid in flue gases produced by burning waste and other non conventional fuels, comprising:
- placing the flue gas in contact with vapors of at least one neutralizing agent, chosen among alkaline metals, their oxides and/or hydroxides and
- filtering the gas,
wherein the temperature of said flue gas, before it is placed into contact with said vapors, is lowered down to about 200°C and wherein said neutralizing agents are turned into vapors before being introduced into said flue gas.

2. The method according to claim 1, wherein said neutralizing agent is turned into vapors either in crucibles heated by a flame, or with an electric resistor, or by electrical induction, or by microwaves.

3. Method according to any one of the preceding claims, wherein said alkaline metals and/or oxides and/or hydroxides are vaporized by the corresponding liquid phases, which are kept boiling in crucibles that are located so as to be struck by the acid gases to be neutralized.

4. Method according to any one of the preceding claims, wherein said sodium hydroxide is brought to a boil at the temperature of approximately 1300-1400 °C.

5. Method according to any one of the preceding claims, wherein said neutralizing agent is turned into the vapor phase by direct combustion, in the industrial gas, of concentrated aqueous solutions and by using high-temperature flames.

## Patentansprüche

1. Verfahren zum Neutralisieren Chlor-basierender Säuren in Verbrennungsgasen entstanden bei der Verbrennung von Abfall und anderen nicht konventionellen Brennstoffen mit:
- Kontaktieren des Abgases mit Dämpfen zumindest eines Neutralisierungsagens ausgewählt unter Alkalimetallen, ihren Oxiden und/oder Hydroxiden und
- Filtern des Abgases,
wobei die Temperatur des Abgases, bevor es mit den Dämpfen in Kontakt kommt, auf ungefähr 200°C abgesenkt wird, und wobei die Neutralisierungsagenzien vor Einbringen in das Abgas in Dämpfe umgewandelt werden.

2. Verfahren nach Anspruch 1, **dadurch gekennzeichnet, daß** das Neutralisierungsagens entweder in durch eine Flamme oder mittels eines elektrischen Widerstands oder durch elektrische Induktion oder durch Mikrowellen beheizten Schmelztiegeln in Dämpfe verwandelt wird.

3. Verfahren nach einem der vorhergehenden Ansprüche, **dadurch gekennzeichnet, daß** die Alkalimetalle und/oder Oxide und/oder Hydroxide aus entsprechenden Flüssigphasen verdampft werden, welche in Schmelztiegeln siedend gehalten werden, die so angeordnet sind, daß sie von den zu neutralisierenden sauren Gasen getroffen werden.

4. Verfahren nach einem der vorhergehenden Ansprüche, **dadurch gekennzeichnet, daß** das Natriumhydroxid bei einer Temperatur von ungefähr 1300 - 1400°C zum Sieden gebracht wird.

5. Verfahren nach einem der vorhergehenden Ansprüche, **dadurch gekennzeichnet, daß** das Neutralisierungsagens durch direkte Verbrennung von konzentrierten wässrigen Lösungen in den industriellen Gasen und unter Verwenden von Hochtemperaturflammen in die Dampfphase überführt wird.

## Revendications

1. Procédé de neutralisation des acides chlorés dans des gaz de combustion produits par la combustion de déchets et d'autres carburants non conventionnels, comprenant:
- la mise en contact du gaz de combustion avec des vapeurs d'au moins un agent neutralisant, choisi parmi les métaux alcalins, leurs oxydes et/ou hydroxydes, et
- la filtration du gaz,
dans lequel la température dudit gaz de combustion, avant qu'il soit mis en contact avec lesdites vapeurs, est abaissée jusqu'à environ 200°C et dans lequel lesdits agents neutralisants sont transformés en vapeurs avant d'être introduits dans ledit gaz de combustion.

2. Procédé selon la revendication 1, dans lequel ledit agent neutralisant est transformé en vapeurs soit dans des creusets chauffés par une flamme, soit avec une résistance électrique, soit par induction électrique, soit par micro-ondes.

3. Procédé selon l'une quelconque des revendications précédentes, dans lequel lesdits métaux alcalins et/ou oxydes et/ou hydroxydes sont vaporisés par les phases liquides correspondantes, qui sont maintenues en ébullition dans des creusets qui sont placés de manière à être heurtés par les gaz acides à neutraliser.

4. Procédé selon l'une quelconque des revendications précédentes, dans lequel ledit hydroxyde de sodium est amené à l'ébullition à une température d'environ 1 300-1 400°C.

5. Procédé selon l'une quelconque des revendications précédentes, dans lequel ledit agent neutralisant est transformé en phase vapeur par combustion directe, dans le gaz industriel, de solutions aqueuses concentrées, et à l'aide de flammes à température élevée.
